# EUROPEAN PATENT SPECIFICATION

(11) **EP 2 881 217 B1**
(45) Date of publication and mention of the grant of the patent: **14.09.2016**
(21) Application number: 14196565.7
(22) Date of filing: 05.12.2014
(51) Int. Cl.: B23P 19/00, B65G 1/08, B65G 11/12

(54) **Device for supplying boxes of components to an assembly station**
Vorrichtung zum Zuführen von Schachteln mit Bauteilen an einen Montageplatz
Dispositif pour alimenter en boîtes de composants un poste d'assemblage

(30) Priority: 09.12.2013 IT TO20131006
(43) Date of publication of application: 10.06.2015
(73) Proprietor: DENSO THERMAL SYSTEMS S.p.A., 10046 Poirino (Torino) (IT)
(72) Inventor: Davter, Massimo, I-10046 POIRINO (Torino) (IT)
(74) Representative: Vanzini, Christian

(56) References cited:
- ES-U- 1 063 831
- GB-A- 994 456
- GB-A- 1 044 183
- JP-A- H0 920 406
- JP-A- 2011 219 182
- US-A1- 2002 159 865

## Description

The present invention relates to a device for supplying boxes of components to an assembly station.

Such a device is known from closest prior art US 2002/159865 A1. The invention has been developed in particular with a view to application to the assembly lines for air-conditioning units of vehicles. Assembly lines of the known type comprise a plurality of assembly stations arranged in series and connected together by means of a conveyor. In each assembly station an operator performs the assembly of certain components on a unit supplied from the preceding station. After assembling the components provided, the operator despatches the unit to the following assembly station.

In assembly lines of this type the components are usually supplied to the various assembly stations in boxes which are open at the top.

A solution currently used by the Applicant for supplying the boxes containing the components to the assembly stations involves the use of one or more supplying devices for each assembly station, each of which with two roller chutes. In each supply device, an upper chute supplies the full boxes to the assembly station and a lower chute has the function of moving the empty boxes away from the assembly station.

During removal of the components, the box situated in the emptying position is arranged inclined, resting with an end edge on the upper end of the lower chute, and with the opposite end edge on the lower end of the upper chute. When the components contained inside the box in the emptying position have been used up, the operator picks up the empty box and arranges it so that it rests completely on the lower chute, which then moves the box away by means of gravity. The operator then picks up the full box and arranges it in the emptying position.

This moving operation is considered to be inconvenient, since the operator must lift the boxes. This operation may in fact be tiring or even create physical problems when it is repeated many times in a day or when the operator does not have a suitable physical build. Moreover, according to the known system, each single device is designed with dimensions intended only for boxes of one size, since the boxes must be prevented from tipping over when they are transferred from the upper chute to the lower chute. Boxes of a different size may therefore not be used in the same device. It would therefore be desirable to have a device able to allow the handling of a wide range of sizes.

An object of the present invention is to propose a supplying device able to eliminate or at least reduce the aforementioned drawbacks.

This object is achieved according to the invention by a device for supplying boxes of components to an assembly station, comprising an upper roller chute inclined from the top downwards and having a lower end oriented towards the assembly station, for supplying full boxes to the assembly station, a lower roller chute arranged underneath the upper chute and inclined from the top downwards and having an upper end oriented towards the assembly station, for moving the empty boxes away, and a receiving area arranged at the upper end of the lower chute, for receiving the boxes supplied by the upper chute, in an inclined position,
and further comprising
a rotating roller chute arranged at the lower end of the upper chute and rotatable about a horizontal central axis, for guiding a box from the upper chute towards the receiving area, and
a stop member provided for locking the rotating chute in a stop position where the rotating chute is inclined from the top downwards and has a lower end oriented towards the assembly station, said stop member being selectively releasable for enabling the rotating chute to freely rotate about the horizontal central axis.

Therefore, in the device according to the invention the transfer of the empty box from the receiving area to the lower chute is performed simply by means of gravity, by releasing the roller chute and then allowing tipping over by means of gravity of the box onto the lower chute. With release of the roller chute the box positioned on the upper chute may also slide downwards, being guided by the rotating chute towards the receiving area no longer occupied by the previous box.

As may be appreciated, for transfer of the box from the receiving area to the lower chute, an effort for lifting the boxes or other elements is no longer required, with the consequent elimination of the drawbacks mentioned above in connection with the prior art.

Moreover, owing to the fact that, in the stop position, the rotating roller chute provides an inclined support surface for the box, the system is able to handle also boxes of different sizes, which as such would not be able to rest against the lower end of the upper chute. Furthermore, the system is also able to handle simultaneously boxes of different sizes.

Preferred embodiments of the invention are defined in the dependent claims. Further characteristic features and advantages of the supplying device according to the invention will become clearer with the following detailed description of an embodiment of the invention with reference to the attached drawings which are provided purely by way of a non-limiting example and in which:
- Figure 1 is a schematic side view of an assembly station provided with a supplying device according to the present invention; and
- Figures 2 to 6 are schematic side views of the supplying device according to the present invention, illustrating operation of this device.

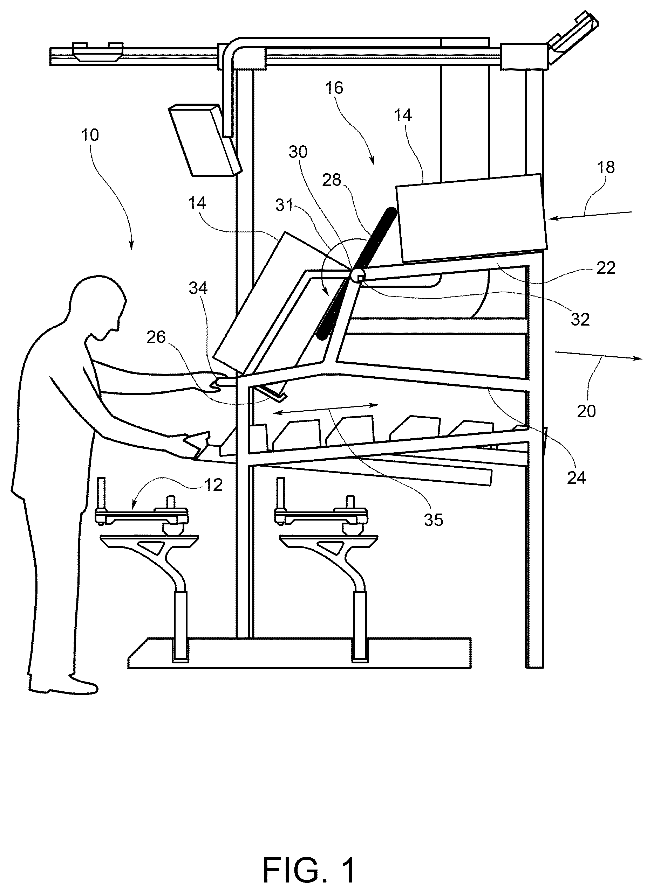

With reference to Figure 1, 10 denotes an assembly station where an operator performs the assembly of components on a unit. A conveyor 12 extending at right angles with respect to the plane of illustration in Figure 1 connects the assembly station 10 to a preceding station and to a following station where other assembly operations are performed. Assembly of the units is performed gradually as the units move from one station to the next one along the line 12.

The components to be assembled on the units are contained inside boxes 14 which are open at the top. Each assembly station 10 has an associated supplying device 16 which supplies the full boxes towards the assembly station 10 in the direction indicated by the arrow 18 and moves the empty boxes 14 away from the assembly station 10 in the direction indicated by the arrow 20.

The supplying device 16 comprises an upper roller chute 22 for supplying the full boxes and a lower roller chute 24 for moving the empty boxes away. The upper chute 22 is inclined from the top downwards, with the lower end oriented towards the assembly station 10. The lower chute 24 is arranged underneath the upper chute 22 and is inclined from the top downwards with the upper end oriented towards the assembly station 10. The upper end of the lower chute 24 is at a lower height than the lower end of the upper chute 22.

The supplying device further comprises a receiving area 26 for receiving the boxes supplied by the upper chute 22. The receiving area 26 is arranged at the upper end of the lower chute 24 and is configured so that the boxes are received by it in an inclined position, with the open part directed towards the assembly station 10, as illustrated in Figure 1.

Still with reference to Figure 1, the supplying device further comprises a rotating roller chute 28 which is positioned at the lower end of the upper chute 22. The rotating chute 28 is arranged rotatably about a horizontal central axis 30 (positioned halfway along the length of the rotating chute), so as to guide the boxes from the upper chute 22 towards the receiving area 26. In the figures the central horizontal axis 30 is oriented at right angles to the plane of the image and the direction of rotation is indicated by the arrow 31 in Figure 1. A stop member 32 is also provided for locking the rotating chute 28 in a stop position where the rotating chute 28 is inclined from the top downwards, with the lower end oriented towards the assembly station 10, as shown in Figure 1.

The stop member 32 is in a position normally interfering with the rotation of the chute 28, so that when the rotating chute 28 is in a position corresponding to the stop position the stop member 32 prevents rotation thereof. The stop member may consist for example of a ratchet device or other devices which may normally occur to a person skilled in the art. The form and the arrangement of the stop member 32 are, however, not essential for the purposes of the present invention.

The stop member 32 can be selectively released so as to allow free rotation of the rotating chute 28 about the horizontal central axis 30. For this purpose a control member 34, for example a lever, is provided, said lever being operationally connected to the stop member 32, for example via a transmission system. In this way, the operator is able to release the stop member 32 by operating the control member 34. Preferably the operating mode of the stop member 32 is configured so as to be monostable. For this purpose, it may be envisaged that the control member 34 and the stop member 32 are able to return into the locking position once the operator releases the control member 34. This may be obtained, for example, by means of resilient members arranged as to bias the control member 34 and the stop member 32 towards the locking position.

Preferably, the receiving area 26 is arranged so as to be slidable alternately away from or towards the lower chute 24, being resiliently biased towards the lower chute 24. The direction of sliding of the receiving area 26 is indicated by the double arrow 35 in Figure 1. The receiving area 26 may be pulled away from the lower chute, against the action of the resilient force, by operating a control member. Preferably the control member of the receiving area 26 coincides with the control member 34 which performs release of the stop member 32 so that, when the operator operate the control member 34 in order to release the rotating chute 28, the receiving area 26 simultaneously moves away from the lower chute 24. This thus avoids interference between the top part of the box 14 and the upper chute 22 arranged above the lower chute 24, as will be understood more clearly below.

During working conditions, the operator removes components from the box, which with its front part rests on the receiving area 26 arranged at the upper end of the lower chute 24, and with its top part rests on the rotating chute 28 in the stop position. In other words, in its stop position the rotating chute 28 acts, in relation to the receiving area 26, as a stop preventing tipping over of the box 14 towards the lower chute 24. At the same time, the rotating chute 28 acts, in relation to the upper chute 22, also as a stop preventing sliding of the box(es) present on the upper chute 22.

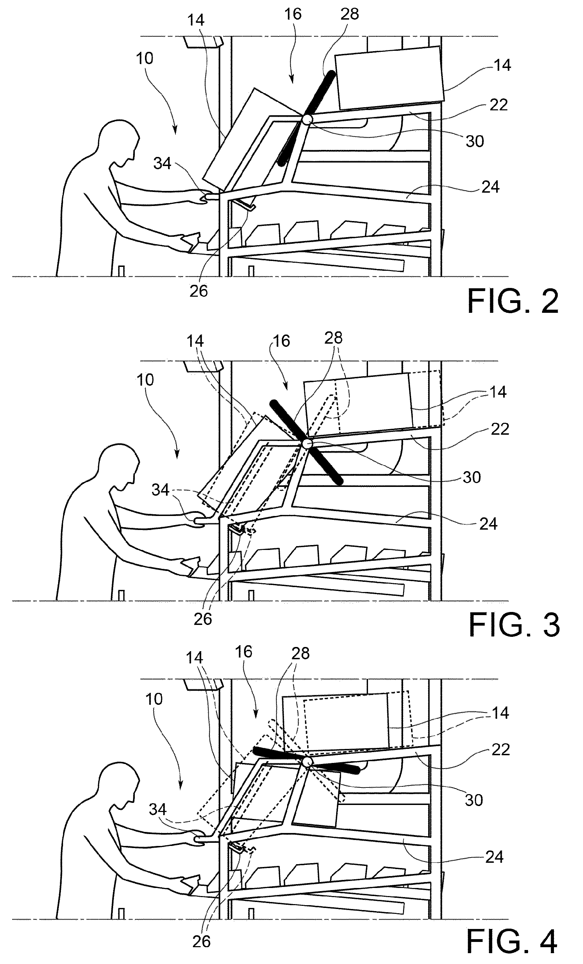

The operating sequence of the supplying device 16 will be described below with reference to Figures 2 to 6.

In the starting position shown in Figure 2, the rotating chute 28 is in the stop position. A box is in the receiving area 26, resting against the lower end of the rotating chute 28. The operator removes the last component from the box 14 in the receiving area 26. A full box 14 is at a standstill on the upper roller chute 22, locked against the upper end of the rotating chute 28.

When the operator operates the control member 34 (Figure 3), the roller chute 28 is released and the receiving area 26 moves away from the lower chute 24. The empty box 14 in the receiving area 26 starts to tip over towards the lower roller chute 24. Even if the box 14 is relatively long, the interference between its top part and the upper chute 22 is prevented owing to the fact that the receiving area 26 has been moved away. The full box 14 on the upper chute 22, released by the rotating chute 28, starts to move forwards.

The rotating chute 28 continues to rotate (Figure 4) and consequently the empty box 14 rests on the lower chute 24 and starts to slide towards the lower end of the lower chute 24 in order to be removed. The full box 14 moves forwards and starts to position itself on the rotating chute 28.

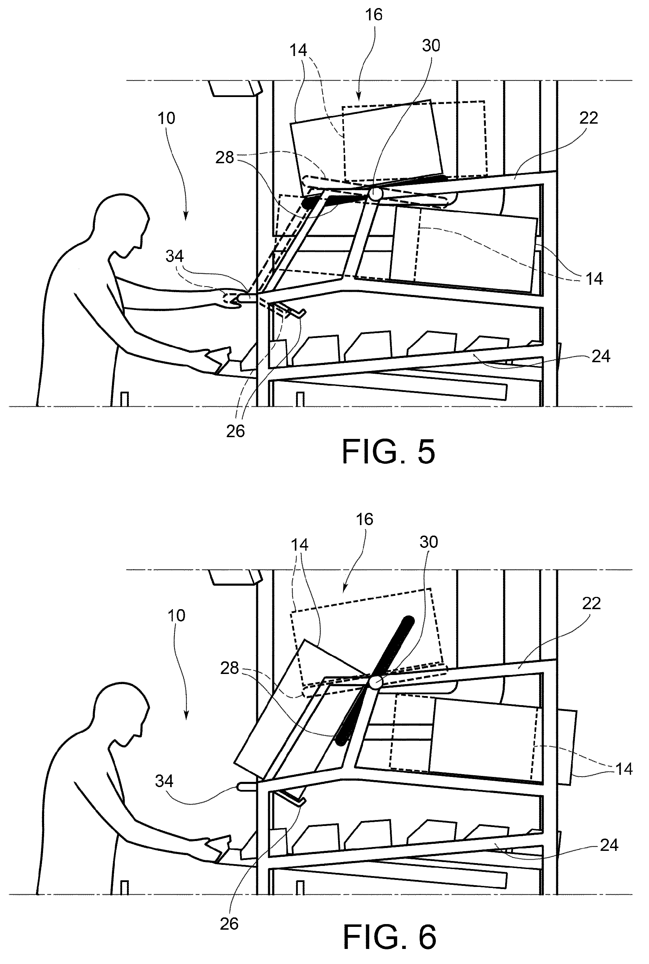

With rotation of the rotating chute 28 nearly complete (Figure 5), the empty box 14 has reached the end of the lower chute 24 and may be removed. The full box 14 is fully arranged on the rotating chute 28 and is moving towards the receiving area 26 which has been freed of the previous box.

After performing a rotation through 180° (Figure 6), the rotating chute 28 is locked again in the stop position. In the meantime, the control member 34 has in fact been released by the operator The full box 14 is now in the receiving area 26 which in the meantime has returned into its position as close as possible to the lower chute 24 and is ready for use.

## Claims

1. Device (16) for supplying boxes of components to an assembly station (10), comprising an upper roller chute (22) inclined from the top downwards and having a lower end oriented towards the assembly station (10), for supplying full boxes (14) to the assembly station (10), a lower roller chute (24) arranged underneath the upper chute (22) and inclined from the top downwards and having an upper end oriented towards the assembly station (10), for moving the empty boxes (14) away, and a receiving area (26) arranged at the upper end of the lower chute (24), for receiving the boxes (14) supplied by the upper chute (22), in an inclined position,
**characterized by** further comprising
a rotating roller chute (28) arranged at the lower end of the upper chute (22) and rotatable about a horizontal central axis (30), for guiding a box (14) from the upper chute (22) towards the receiving area (26), and
a stop member (32) provided for locking the rotating chute (28) in a stop position where the rotating chute (28) is inclined from the top downwards and has a lower end oriented towards the assembly station (10), said stop member being selectively releasable for enabling the rotating chute (28) to freely rotate about the horizontal central axis (30).

2. Device according to Claim 1, wherein in its stop position the rotating chute (28) operates, with respect to the upper chute (22), as a stop preventing the sliding movement of a box (14) on the upper chute (22) and, with respect to the receiving area (26), as a stop preventing the tilting movement of a box (14) towards the lower chute (24).

3. Device according to Claim 1 or 2, wherein the receiving area (26) is arranged so as to be slidable alternately away from or towards the lower chute (24), the receiving area being resiliently biased towards the lower chute (24).

4. Device according to Claim 3, wherein the receiving area (26) is movable away from the lower chute (24) by operating on a control member (34) provided also for releasing the stop member (32).

## Patentansprüche

1. Vorrichtung (16), zum Zuführen von Komponentenkisten zu einer Montagestation (10), wobei die Vorrichtung eine obere Rollenrutsche (22), die von oben nach unten hin geneigt ist und bei der ein unteres Ende zu der Montagestation (10) hin ausgerichtet ist, zum Zuführen voller Kisten (14) zu der Montagestation (10), eine untere Rollenrutsche (24), die unterhalb der oberen Rutsche (22) angeordnet ist, von oben nach unten hin geneigt ist und bei der ein oberes Ende zu der Montagestation (10) hin ausgerichtet ist, zum Wegbewegen der leeren Kisten (14), und einen Aufnahmebereich (26) aufweist, der an dem oberen Ende der unteren Rutsche (24) in einer geneigten Position angeordnet ist, zum Aufnehmen der Kisten (14), die durch die obere Rutsche (22) zugeführt werden,
**dadurch gekennzeichnet, dass** die Vorrichtung ferner folgende Merkmale aufweist:
eine Drehrollenrutsche (28), die an dem unteren Ende der oberen Rutsche (22) angeordnet und um eine horizontale Mittelachse (30) drehbar ist, zum Führen einer Kiste (14) von der oberen Rutsche (22) zu dem Aufnahmebereich (26) hin, und
ein Anschlagbauglied (32), das vorgesehen ist, um die Drehrutsche (28) in einer Anschlagposition zu verriegeln, in der die Drehrutsche (28) von oben nach unten hin geneigt ist und ein unteres Ende derselben zu der Montagestation (10) hin ausgerichtet ist, wobei das Anschlagbauglied selektiv freigebbar ist, zum Ermöglichen, dass sich die Drehrutsche (28) frei um die Mittelachse (30) dreht.

2. Vorrichtung gemäß Anspruch 1, bei der die Drehrutsche (28) in der Anschlagposition derselben in Bezug auf die obere Rutsche (22) als ein Anschlag, der die Gleitbewegung einer Kiste (14) auf der oberen Rutsche (22) verhindert und in Bezug auf den Aufnahmebereich (26) als ein Anschlag wirksam ist, der die Kippbewegung einer Kiste (14) zu der unteren Rutsche (24) hin verhindert.

3. Vorrichtung gemäß Anspruch 1 oder 2, bei der der Aufnahmebereich (26) angeordnet ist, um wechselweise weg von der unteren Rutsche (24) oder zu derselben hin gleitfähig zu sein, wobei der Aufnahmebereich federnd zu der unteren Rutsche (24) hin vorgespannt ist.

4. Vorrichtung gemäß Anspruch 3, bei der der Aufnahmebereich (26) durch Betreiben eines Steuerungsbauglieds (34), das außerdem zum Freigeben des Anschlagbaugliedes (32) bereitgestellt ist, von der unteren Rutsche (24) wegbewegbar ist.

## Revendications

1. Dispositif (16) pour la fourniture de boîtes de composants à un poste d'assemblage (10), comprenant une glissière roulante supérieure (22) inclinée depuis le dessus vers le bas et présentant une extrémité inférieure orientée vers le poste d'assemblage (10), pour la fourniture de boîtes pleines (14) au poste d'assemblage (10), une glissière roulante inférieure (24) agencée sous la glissière supérieure (22) et inclinée depuis le dessus vers le bas et présentant une extrémité supérieure orientée vers le poste d'assemblage (10) pour l'éloignement des boîtes vides (14), et une zone de réception (26) agencée sur l'extrémité supérieure de la glissière inférieure (24) pour la réception des boîtes (14) fournies par la glissière supérieure (22), dans une position inclinée,
**caractérisé en ce qu'**il comprend en outre
une glissière roulante rotative (28) agencée sur l'extrémité inférieure de la glissière supérieure (22) et pouvant tourner autour d'un axe central horizontal (30) pour le guidage d'une boîte (14) depuis la glissière supérieure (22) vers la zone de réception (26) et
un élément d'arrêt (32) prévu pour le verrouillage de la glissière rotative (28) dans une position d'arrêt où la glissière rotative (28) est inclinée depuis le dessus vers le bas et présente une extrémité inférieure orientée vers le poste d'assemblage (10), ledit élément d'arrêt étant libérable sélectivement pour permettre à la glissière rotative (28) de tourner librement autour de l'axe central horizontal (30).

2. Dispositif selon la revendication 1, dans lequel dans sa position d'arrêt, la glissière rotative (28) fonctionne, par rapport à la glissière supérieure (22), comme une butée empêchant le mouvement coulissant d'une boîte (14) sur la glissière supérieure (22) et par rapport à la zone de réception (26) comme une butée empêchant le mouvement d'inclinaison d'une boîte (14) vers la glissière inférieure (24).

3. Dispositif selon la revendication 1 ou 2, dans lequel la zone de réception (26) est agencée de sorte à être coulissante alternativement loin ou vers la glissière inférieure (24), la zone de réception étant inclinée par résilience vers la glissière inférieure (24).

4. Dispositif selon la revendication 3, dans lequel la zone de réception (26) est mobile loin de la glissière inférieure (24) par l'actionnement sur un élément de commande (34) prévu aussi pour libérer l'élément d'arrêt (32).
